Europäisches Patentamt

(19) European Patent Office

Office européen des brevets

(11) Numéro de publication : **0 129 466**
**B1**

(12) **FASCICULE DE BREVET EUROPÉEN**

(45) Date de publication du fascicule du brevet :
09.09.87

(21) Numéro de dépôt : **84401174.2**

(22) Date de dépôt : **06.06.84**

(51) Int. Cl.⁴ : **C 03 B 23/11**

(54) Dispositif pour le chargement d'une machine destinée au traitement, notamment thermique, d'objets cylindriques, notamment en verre, tels que cannes de verre.

(30) Priorité : **14.06.83 FR 8309801**

(43) Date de publication de la demande :
**27.12.84 Bulletin 84/52**

(45) Mention de la délivrance du brevet :
**09.09.87 Bulletin 87/37**

(84) Etats contractants désignés :
**AT BE CH DE GB IT LI NL**

(56) Documents cités :
**FR-A- 1 467 777**

(73) Titulaire : **SOCIETE FRANCAISE D'AMPOULES MECA-NIQUES Société dite:**
**Boulevard Victor Hugo**
**F-76390 Aumale (FR)**

(72) Inventeur : **Soulard, Dominique**
**Gauville**
**F-80590 Lignieres-Chatelain (FR)**

(74) Mandataire : **Armengaud, Charles**
**Cabinet ARMENGAUD AINE 3, Avenue Bugeaud**
**F-75116 Paris (FR)**

## Description

La présente invention concerne un dispositif perfectionné pour le chargement automatique, en marche, d'une machine destinée au traitement, notamment au traitement thermique, d'objets de forme cylindrique allongée, notamment d'objets en verre, tels que cannes de verre. Le dispositif suivant l'invention est destiné à être utilisé plus particulièrement pour l'alimentation en cannes de verre d'une machine destinée à obtenir à partir de ces cannes des ampoules pour produits pharmaceutiques.

Une telle machine se présente sous la forme d'un carrousel animé d'une vitesse angulaire souvent très importante qui comporte un certain nombre de « postes » qu'il s'agit de garnir d'au moins une canne à traiter. Le chargement d'une telle machine qui doit se faire en marche pose des problèmes délicats d'autant que les objets qu'il s'agit de charger sont, par hypothèse, de nature fragile.

Certaines solutions connues à ce problème font appel à des dispositifs, tels que transporteurs à chaîne, à bande, ou l'équivalent, qui sont extérieurs à la machine et amènent les cannes tangentiellement à la machine.

Une autre solution est donnée par le document FR-A 1 467 777 ayant les caractéristiques du préambule de la revendication 1. Elle consiste en un dispositif qui comporte, placés verticalement et régulièrement répartis sur la périphérie de la machine, des magasins ou barillets dont l'axe est parallèle à l'axe général de la machine, et dans lesquels les cannes de verre sont insérées à la main, et desquels les cannes sont transférées à la machine.

Ces différents dispositifs connus ne donnent pas entière satisfaction, en raison de la vitesse, très importante, à laquelle doit s'opérer le transfert des cannes du dispositif de chargement sur la machine à charger.

L'invention apporte à ce problème une solution efficace. Elle consiste en un dispositif constitué par un unique barillet de chargement qui coiffe la machine, coaxialement à cette dernière, et entraîné en rotation, lors du chargement, à la même vitesse que la machine, ce barillet pouvant être débrayé et arrêté pour permettre son garnissage en objets, tels que cannes de verre, sans avoir à arrêter la machine de traitement.

De manière préférentielle, le barillet est constitué par deux couronnes coaxiales superposées, coaxiales à la machine, entre lesquelles sont placées les cannes à transférer à la machine.

La couronne supérieure présente des postes, en nombre égal à celui des postes de la machine, munis de moyens destinés à maintenir la canne, une fois introduite dans son poste, en position correcte dans ce dernier.

De son côté, la couronne inférieure comporte des couloirs de chargement, en nombre égal à celui des postes à pourvoir de la machine, dans lesquels agit une vis sans fin dirigée radialement et qui est actionnée au moment opportun pour l'amenée en position correcte de la canne introduite dans le couloir de chargement.

Quant au garnissage en cannes du barillet de chargement, il peut être avantageusement effectué, conformément à l'invention, au moyen d'un système automatique comportant des moyens pour prélever les cannes d'un magasin où elles sont en position horizontale, et les redresser dans une position telle qu'elles puissent être placées dans le barillet de façon à pouvoir en être transférées dans la machine.

Les divers caractéristiques et avantages de l'invention ressortiront de la description qui va suivre d'une de ses formes possibles de réalisation donnée uniquement à titre d'exemple non limitatif.

Au cours de cette description, on se réfère aux dessins ci-joints qui montrent :

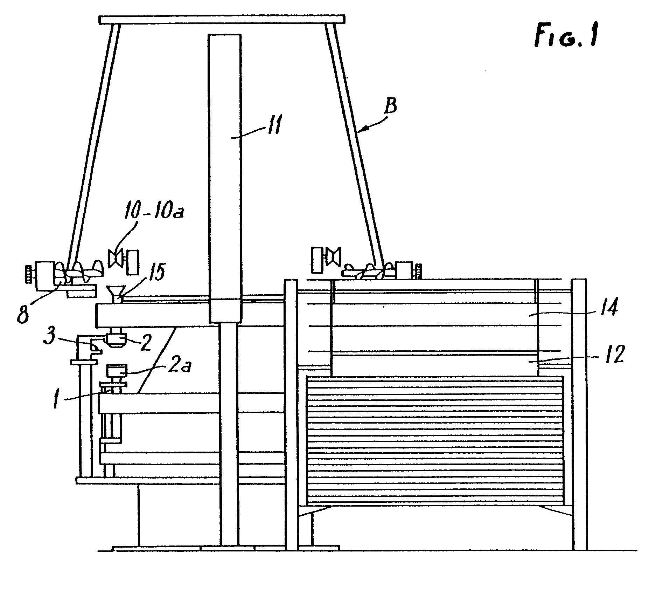

Figures 1 et 2 des vues schématiques en élévation, prises à 90° l'une de l'autre, d'une machine à traiter des cannes de verre munies d'un dispositif suivant l'invention,

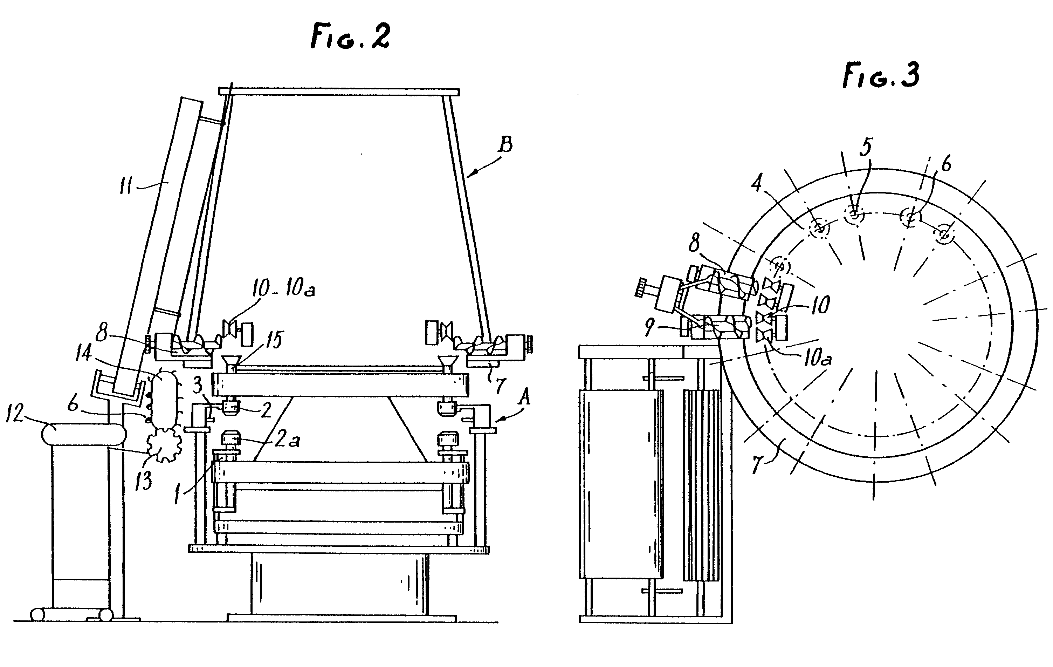

Figure 3 une vue en plan par-dessus de l'ensemble ainsi constitué.

L'exemple choisi se rapporte à une machine destinée au traitement thermomécanique de cannes en verre en vue de la fabrication d'ampoules médicales. Il doit être bien entendu, cependant, que le dispositif suivant l'invention peut être utilisé pour toute autre machine, du même type, permettant l'obtention d'objets du même genre mais d'une autre destination.

Une machine du genre considéré, désignée, d'une façon générale sur les dessins annexés, par la référence A est constituée par un carrousel comportant un certain nombre de postes 1. A chacun de ces postes la canne à traiter est saisie entre un mandrin supérieur fixe 2 et un mandrin inférieur 2a, déplaçable vers le bas de la machine. La canne, saisie entre les mandrins est soumise à l'action de brûleurs 3 et est étirée par l'abaissement du mandrin inférieur 2a.

Les cannes dont la machine A doit être garnie en marche, alors qu'elle tourne à une vitesse qui peut être relativement élevée, sont, conformément à l'invention, transférées automatiquement à la machine par un barillet de chargement désigné d'une façon générale par la référence B.

Ce barillet est, conformément à l'invention, disposé au-dessus de la machine A et coaxialement à cette dernière. Il est susceptible d'être entraîné en rotation en synchronisme avec la machine, au moment voulu, par tout moyen quelconque convenable.

Dans l'exemple traité, le barillet de chargement B comprend :

une couronne supérieure 4, dans laquelle sont prévus des logements 5 pour les cannes, ces logements étant en nombre correspondant à celui des postes de la machine A. Ces logements, destinés à recevoir les cannes 6, sont munis de moyens tels que fermetures à ressort, pour le maintien en place des cannes dans leur logement,

une couronne inférieure 7, comportant des couloirs de chargement 8 en nombre égal à celui des cannes à charger, dans chacun desquels est prévue une vis sans fin 9 servant à l'introduction de cannes amenées aux couloirs de chargement dans les conditions que l'on verra plus loin.

Le barillet de chargement est monté de façon à pouvoir tourner librement sur la partie supérieure de la machine A. Une fois garni de cannes, il est couplé à la machine par tout moyen quelconque convenable tel que crabotage, ou l'équivalent.

Les couloirs de chargement 8 débouchent sur un dispositif de descente des cannes vers la machine constitué, dans l'exemple traité, par deux diabolos 10, 10a, entre lesquels sont introduites les cannes. Ces diabolos sont agencés de façon à serrer entre eux la canne provenant du couloir d'alimentation 8 et ils sont animés d'un mouvement de rotation en vue de la descente des cannes vers les postes de la machine qui leur sont assignés.

L'alimentation en cannes du barillet de chargement peut se faire de différentes façons. Elle peut par exemple être réalisée au moyen d'un tampon de chargement constitué par une chaîne sans fin qui amène les cannes au barillet, soit en continu, soit suivant tout rythme ou séquence voulus. Le tampon de chargement est lui-même alimenté, soit à partir d'une nappe de cannes horizontales à l'aide d'un mécanisme qui les redresse et vient les placer dans la chaîne, soit à partir d'un chargeur vertical.

Cette alimentation peut également, comme c'est le cas dans l'exemple traité, être réalisée au moyen d'un automate de chargement, représenté schématiquement en 11, qui prend les cannes, amenées à partir d'un magasin 12 et un répartiteur 13, à une chaîne 14, en position horizontale, les redresse et vient les placer, par leur extrémité supérieure, dans les logements 5 de la couronne supérieure du barillet et par leur extrémité inférieure dans leur couloir d'alimentation 8.

Les phases de fonctionnement d'un dispositif conforme à l'invention sont les suivantes :

les cannes une fois en place dans le barillet de chargement et encliquetées dans leur logement de la couronne supérieure, le barillet est embrayé sur la machine après un repérage exact de la coïncidence des postes du barillet et de ceux de la machine.

Les diabolos 10, 10a, sont serrés sur les cannes et mis en rotation. Les cannes descendent alors dans des conduits 15 amenant les cannes aux mandrins 2, 2a, de la machine A.

Les diabolos sont alors desserrés et arrêtés et le barillet est débrayé de la machine pour permettre son alimentation en cannes.

Bien entendu les différents cycles et séquences de la machine et de son barillet de chargement peuvent être réalisés par tout moyen quelconque, avantageusement par programmation.

**Revendications**

1. Dispositif pour le chargement d'une machine destinée au traitement, notamment thermo-mécanique, d'objets cylindriques allongés, notamment en verre, tels que cannes de verre, machine consistant en un carrousel comportant une pluralité de postes pour le traitement assuré par la machine, ce dispositif étant caractérisé en ce qu'il est constitué par un unique barillet de chargement (B) qui coiffe la machine (A), coaxialement à cette dernière et entraîné en rotation, lors du chargement, à la même vitesse que la machine, ce barillet pouvant être débrayé et arrêté pour permettre son garnissage en objets, tels que cannes de verre, sans avoir à arrêter la machine de traitement.

2. Dispositif suivant la revendication 1, caractérisé en ce que le barillet de chargement est constitué par deux couronnes coaxiales superposées (4, 7), coaxiales à la machine, entre lesquelles sont placées les cannes (6) à transférer à la machine (A).

3. Dispositif suivant l'une quelconque des revendications précédentes, caractérisé en ce que la couronne supérieure (4) du barillet présente des postes (5) en nombre égal à celui des postes de la machine, munis de moyens destinés à maintenir la canne, une fois introduite dans un poste, en position correcte dans ce dernier.

4. Dispositif suivant l'une quelconque des revendications précédentes, caractérisé en ce que la couronne inférieure (7) comporte des couloirs de chargement (8) en nombre égal à celui des postes, à pourvoir, de la machine, dans lesquels agit une vis sans fin (9) dirigée radialement et qui est actionnée au moment opportun pour l'amenée en position correcte de la canne (6) introduite dans son couloir de chargement.

5. Dispositif suivant l'une quelconque des revendications précédentes, caractérisé en ce qu'il comporte un système de descente des objets, tels que cannes, vers la machine de traitement, constitué par deux diabolos (10, 10a) entre lesquels chaque objet est pincé et qui sont animés d'un mouvement de rotation pour faire progresser l'objet vers la machine.

6. Dispositif suivant la revendication 5, caractérisé en ce que le système de descente des objets, tels que cannes, vers la machine, débouche dans un conduit 15 les amenant à leur poste de traitement, comportant des moyens pour leur maintien en position correcte dans ce poste.

7. Dispositif suivant l'une quelconque des revendications précédentes, caractérisé en ce que le garnissage en objets, tels que cannes, du barillet de chargement, est réalisé automatiquement au moyen d'un système comportant des moyens (11, 13, 14) pour prélever les cannes d'un magasin (12), où elles sont en position horizontale, et les redresser dans une position telle qu'elles sont placées dans le barillet de façon à pouvoir être transférées de ce barillet dans la machine.

8. Dispositif suivant l'une quelconque des revendications précédentes, caractérisé en ce que le barillet de chargement est actionné et commandé de façon à ce que les objets tels que cannes, étant, par leur extrémité supérieure, amenés dans les logements (5) prévus dans la couronne supérieure (4) du barillet, leur extrémité inférieure soit, par la mise en action des vis sans fin (9), amenée au système (10, 10a) permettant leur descente dans la machine, le barillet étant alors couplé à la machine de façon à synchroniser le mouvement de rotation du barillet et de la machine, et à actionner le système de descente (10, 10a) des objets en vue de leur introduction dans les moyens (2, 2a) destinés à leur maintien en position dans le poste de la machine qui leur est assigné.

## Claims

1. A device for charging a machine for the treatment, especially thermo-mechanical treatment, of elongate cylindrical objects, especially of glass, such as glass tubes, which machine consists of a circular conveyor comprising a plurality of work stations for the treatment carried out by the machine, this device being characterized in that it consists of a single charging barrel (B) which caps the machine (A) coaxially thereto and is driven rotationally, at the time of charging, at the same speed as the machine, this barrel being capable of being put out of operation and stopped to allow it to be loaded with objects, such as glass tubes, without the treatment machine having to be stopped.

2. A device according to claim 1, characterized in that the charging barrel consists of two coaxial, superposed rings (4, 7), coaxial with the machine, between which are placed the tubes (6) to be transferred to the machine (A).

3. A device according to either of the preceding claims, characterized in that the upper ring (4) of the barrel has a number of stations (5) equal to that of the machine's work stations, the barrel's stations (5) being equipped with means of holding the rod, once it has been introduced into a station, in the correct position therein.

4. A device according to any one of the preceding claims, characterized in that the lower ring (7) comprises a number of charging chutes (8) equal to the number of machine work stations to be equipped, in which charging chutes (8) there acts an endless screw (9) which is directed radially and actuated at the appropriate moment to bring into the correct position the tube (6) introduced into its charging chute.

5. A device according to any one of the preceding claims, characterized in that it comprises a system for the descent of the objects, such as tubes, towards the treatment machine, consisting of two bobbin-shaped wheels (10, 10a) between which each object is grasped and which move rotationally to cause the object to progress towards the machine.

6. A device according to claim 5, characterized in that the system for the descent of the objects, such as tubes, towards the machine opens into a channel (15) bringing them to their treatment stations, comprising means for holding them in the correct position in these stations.

7. A device according to any one of the preceding claims, characterized in that the charging barrel is loaded with objects, such as tubes, automatically by means of a system comprising means (11, 13, 14) of removing the tubes from a magazine (12), where they are in the horizontal position, and setting them upright in such a position that they are placed in the barrel in such a way as to be capable of being transferred from this barrel to the machine.

8. A device according to any one of the preceding claims, characterized in that the charging barrel is actuated and controlled in such a way that with the objects such as tubes being brought by their upper ends into the receptacles (5) provided in the upper ring (4) of the barrel, their lower end is, by the actuating of the endless screws (9), brought to the system (10, 10a) allowing their descent into the machine, the barrel thus being coupled to the machine in such a way that the rotational movements of the barrel and the machine are synchronized and the system (10, 10a) for the descent of the objects is actuated with a view to the introduction of the objects into the means (2, 2a) intended to hold them in position in the machine work stations assigned to them.

## Patentansprüche

1. Vorrichtung zum Speisen von Glasrohren an einer Maschine zur Herstellung von Ampullen, wobei diese Maschine einen Drehteller aufweist, der eine Vielzahl von Bearbeitungsstationen trägt, dadurch gekennzeichnet, daß die Vorrichtung aus einer Ladetrommel (B) besteht, die die Maschine (A) koaxial überdeckt und bei der Einspeisung mit gleicher Drehgeschwindigkeit wie die Maschine rotiert, wobei die Trommel ausgekuppelt und angehalten werden kann, um ein Auffüllen mit Glasrohren zu ermöglichen, ohne die Bearbeitungsmaschine anzuhalten.

2. Vorrichtung nach Anspruch 1, dadurch gekennzeichnet, daß die Ladetrommel aus zwei koaxial übereinander angeordneten Ringen (4, 7) besteht, die koaxial zur Maschine ausgerichtet sind und zwischen die die Glasrohre (6), die an die Maschine (A) weitergegeben werden sollen, eingebracht werden.

3. Vorrichtung nach einem oder mehreren der vorstehenden Ansprüche, dadurch gekennzeichnet, daß der obere Ring (4) der Trommel Aufnahmen (5) in gleicher Zahl, wie Bearbeitungsstationen auf der Maschine vorhanden sind, aufweist, die mit einer Haltevorrichtung für die Rohre, die in die Aufnahmen eingelegt wurden, versehen sind, um die Rohre in der richtigen Stellung festzuhalten.

4. Vorrichtung nach einem oder mehreren der vorstehenden Ansprüche, dadurch gekennzeichnet, daß der untere Ring (7) Laderutschen (8) in gleicher Zahl, wie Bearbeitungsstationen auf der Maschine vorhanden sind, aufweist, in denen sich jeweils eine radial angeordnete Förderschnecke (9) dreht, die so gesteuert ist, daß sie im richtigen Moment das Glasrohr (6) in der Laderutsche in der richtigen Stellung erfaßt.

5. Vorrichtung nach einem oder mehreren der vorstehenden Ansprüche, gekennzeichnet durch eine Fördereinrichtung, die die Glasrohre der Bearbeitungsmaschine zuführt und aus zwei Doppelkegelrädern (10, 10a) besteht, wobei sich diese Doppelkegelräder, zwischen denen jedes Rohr erfaßt wird, in einer Drehbewegung befinden, um die Glasrohre zur Maschine zu befördern.

6. Vorrichtung nach Anspruch 5, dadurch gekennzeichnet, daß die Fördereinrichtung, die die Glasrohre zur Maschine bringt, in einen Zuführungskanal (15) mündet, der die Rohre der Bearbeitungsstation zuführt und eine Einrichtung zur genauen Positionierung der Rohre bezüglich der Bearbeitungsstation aufweist.

7. Vorrichtung nach einem oder mehreren der vorstehenden Ansprüche, dadurch gekennzeichnet, daß das Beschicken der Ladetrommel mit Glasrohren automatisch erfolgt, und zwar mit Hilfe einer Einrichtung, die Hilfsvorrichtungen (11, 13, 14) zum Entnehmen der Glasrohre aus einem Vorratsbehälter (12), wo sich die Glasrohre in einer horizontalen Lage befinden, und zum Aufstellen der Glasrohre, aufweist, so daß diese in die Trommel gestellt und durch diese Trommel in die Maschine eingebracht werden können.

8. Vorrichtung nach einem oder mehreren der vorstehenden Ansprüche, dadurch gekennzeichnet, daß die Ladetrommel so betrieben und gesteuert wird, daß die Glasrohre mit ihrem oberen Ende in die Aufnahmen (5) im oberen Ring (4) der Trommel eingebracht werden, so daß ihr jeweils unteres Ende dann durch die Wirkung der Förderschnecke (9) der Fördereinrichtung (10, 10a), die das Einbringen in die Maschine erlaubt, zugeführt wird, daß die Trommel dann fest mit der Maschine gekoppelt wird, um die Drehbewegung der Trommel und der Maschine zu synchronisieren und um die Fördereinrichtung (10, 10a) für die Rohre im Hinblick auf deren Einbringung in die Hilfsvorrichtung (2, 2a), die jedes Rohr in seiner bestimmungsgemäßen Stellung in der Bearbeitungsstation der Maschine festhalten, in Bewegung zu setzen.

Fig.1

Fig. 2

Fig. 3

0 129 466